Europäisches Patentamt

European Patent Office

Office européen des brevets

(11) Publication number: **0 173 553**
**B1**

(12) **EUROPEAN PATENT SPECIFICATION**

(45) Date of publication of patent specification: **25.04.90**

(21) Application number: **85306036.6**

(22) Date of filing: **23.08.85**

(51) Int. Cl.⁵: **B 28 B 1/29, C 04 B 18/06 // C04B18/14**

(54) **Lightweight concrete roof tiles.**

(30) Priority: **24.08.84 GB 8421605**
**09.01.85 US 689962**

(43) Date of publication of application:
**05.03.86 Bulletin 86/10**

(45) Publication of the grant of the patent:
**25.04.90 Bulletin 90/17**

(84) Designated Contracting States:
**AT BE CH DE FR GB IT LI LU NL SE**

(56) References cited:
**US-A-3 677 686**
**US-A-4 310 486**
**US-A-4 384 896**

(73) Proprietor: **MARLEY TILE A.G.**
**Utoquai 43**
**CH-8008 Zürich (CH)**
㊺ **BE CH DE**

(73) Proprietor: **MARLEY (U.K.) LIMITED**
**Riverhead**
**Sevenoaks Kent TN13 2DS (GB)**
㊺ **GB**

(72) Inventor: **Wood, John William Michael**
**9 Hayesford Park Drive**
**Bromley, Kent BR2 9DA (GB)**
Inventor: **Hack, Richard Charles**
**102 Longlands Park Crescent**
**Sidcup, Kent DA15 7NQ (GB)**

(74) Representative: **Watkins, Arnold Jack et al**
**European Patent Attorney Frank B. Dehn & Co.**
**Imperial House 15-19 Kingsway**
**London WC2B 6UZ (GB)**

Courier Press, Leamington Spa, England.

## Description

This invention relates to the production of concrete roof tiles by the well-known roller and slipper method and is particularly concerned with such a method of production which provides lightweight concrete roof tiles of a kind which are for example useful as a replacement for wood shingles and shakes, asphalt shingles, asbestos cement roofing, slates, etc.

It is well known to produce concrete roof tiles by the so-called roller and slipper method wherein the tile forming material which usually consists of a mix of cement, sand and water is compressed on to moving pallets first by means of a roller and then by means of a slipper. The ribbon of tile forming material thereby obtained, which is conventionally referred to as the extrudate, is then cut into sections of the required length and cured e.g. at elevated temperatures under conditions of high humidity to produce the finished roof tiles. A description of the conventional apparatus which has for many years been used in the commercial production of concrete roof tiles by the roller and slipper method is for example included in PCT International Publication No. WO 85/00135.

Roof tiles of essentially flat and of convoluted constructions are routinely made by the roller and slipper method and typically have densities of from 2.1 to 2.2 g/cm$^3$. Interlocking roof tiles having the usual dimensions for the United Kingdom of about 413 mm length×330 mm width×11.5 to 12.5 mm thickness and for the United States of America of about 422mm length×333mm width× 11.5 to 12.5mm thickness generally have a weight in the range of from 4.2 to 5.0 kg per tile, strengthening ribs, nibs and weatherchecks which are provided on the undersides of concrete interlocking roof tiles adding to the overall weight.

It is recognised that concrete roof tiles of the kind described above provide a satisfactory and highly durable roofing material and they are extensively used for the roofing of new houses and other buildings. For re-roofing, however, there is frequently a problem in that the roofing material to be replaced may be a lighter weight roofing material such as for example wood shingles and shakes, asphalt shingles, asbestos cement roofing, slates, etc. and the building concerned may be incapable of bearing the additional load which would result from re-roofing with conventional concrete roof tiles. Thus, for example, with timber framed buildings, it may be necessary to reinforce the existing roof timbers to ensure that they will bear the additional load. This is costly and in practice often results in a decision not to utilise concrete roof tiles for re-roofing work.

There is thus a need for a concrete roof tile which is lighter in weight than conventional concrete roof tiles of the kind described above but which has adequate strength and durability whereby it is suitable for use as a replacement for wood shingles and shakes, asphalt shingles, asbestos cement roofing, slates, etc.

It is known that the weight of concrete can be reduced by the use of lightweight aggregates as a partial or complete substitute for sand. Numerous lightweight aggregates have been proposed for this purpose including naturally occurring materials such as pumice and scoria and material produced by manufacturing processes such as sintered pulverised fuel ash (e.g. available as Lytag from Pozzolanic-Lytag Limted of Hemel Hempstead, Hertfordshire, England) and expanded materials such as expanded clay, shale, slate, vermiculite and perlite. In general, however, the use of such lightweight aggregates in order to obtain a lower weight concrete results in a reduction in flexural strength and consequently, in order to obtain a concrete roof tile of adequate flexural strength, it is necessary to increase the thickness of the tiles made of such lightweight concrete as compared with that of a conventional concrete roof tile to such an extent that no worthwile weight advantage is achieved.

It is an object of the present invention to provide a method of producing concrete roof tiles which are substantially lighter in weight than conventional concrete roof tiles but which have comparable flexural strength.

Another problem which has arisen in attempting to produce concrete roof tiles by the roller and slipper method using lightweight aggregates as a substitute for sand is caused by the consequent change in the rheological properties of the mix. In order to produce a satisfactory concrete roof tile by the roller and slipper method, it is important that the mix should flow evenly during extrusion, i.e. during compression first between the pallets and the roller and then during further compression between the pallets and the slipper, as otherwise there are likely to be difficulties with uneven compaction, rough and open surfaces on the wear side of the tiles and poor definition of interlocks, upstands, nibs and weatherchecks on the under side of the tiles. Also the mix must have a sufficient degree of cohesion so that cracks do not form in the extrudate, e.g. upon cutting into sections of the required length for use as roof tiles. While it may be possible to improve the cohesion of the extrudate by increasing the amount of water in the mix, this may also result in a greater tendency for the mix to adhere to the equipment with which it comes into contact during the manufacturing process, e.g. the blades and sides of the mixer, conveyor belting, the roller, the slipper, etc. Also the use of wetter mixes can result in slumping of the extruded tiles, for example upon cutting and when they are in the process of being transferred to a curing chamber. While conventional cement/ sand/water mixes having satisfactory properties for use in the roller and slipper method can be prepared, it has been found that the replacement of sand by lightweight aggregates modifies the rheology of the mix and that the correct balance of properties which is essential to the production of a satisfactory extruded concrete roof tile is no longer attainable. This has led to the proposal to replace only part of the sand used in the conventional mix by lightweight aggregate, thereby achieving a mix having a balance of rheological properties closer to that of a conventional cement/sand/water mix, but this leads to a reduction in the weight advantage.

It has been proposed to incorporate fine particle size silica in cement/aggregate/water mixes for use in the production of concrete products including lightweight concrete products, see for example US 3 232 777 (Bush), US 3 880 664 (Schulze), US 4 087 285 (Kurz) and PCT International Publication No. WO 80/00959. The presence of fine particle size silica in such mixes modifies the rheological properties thereof by increasing the flowability. Thus US 3 880 664 (Schulze) refers to the addition of small amounts of fumed silica as being most advantageous to certain types of extrusion (col. 4, lines 16—18) and to the fumed silica adding universal and superior extrudability qualities (col 4, line 22), the silica fume used being highly thixotropic and the mix being very fluid and pliable (col 4, lines 37—38). There is also reference in US 3 880 664 (Schulze) to the use of a greatly increased percentage of water in conjunction with the fumed silica where it is particularly desired to make lightweight products (col. 5, lines 7—10). PCT International Publication No. WO 80/00959 also describes the use of readily flowable mixes (see for example p. 9, line 23; p 24, lines 20—25; page 27, lines 12—21) and it can be seen from the consistency test described at page 64, line 28 to page 65, line 3 that the mixes have a strong tendency to slump after shaping.

The readily flowable mixes described in the above-mentioned publications are unsuitable for use in the roller and slipper method for the production of concrete roof tiles, for which it is essential that the mix be non-pourable with a low tendency to slump after shaping. Thus, in contrast to the mixes tested for consistency in PCT International Publication No. WO 80/00959, mixes suitable for use in the roller and slipper method for producing concrete roof tiles need to give diameter measurements of not more than about 10.5 cms when evaluated in accordance with British Standard No. 4551 by measuring the spreading of a core of the mix formed by introducing the mix into a 5.08 ±0.05 cm high brass core mould with bottom internal diameter of 10.16±0.05 cms and upper internal diameter of 6.99±0.05 cm on a flow table with brass surface, removing the mould and subjecting the flow table to 25 drops (i.e. strokes). The mix must also have good cohesivity whereby, when subjected to the above consistency test, no cracks visible to the naked eye are apparent in the shaped material. Prior to the present invention, it was to be expected that the incorporation of silica fume in mixes for use in the roller and slipper method for producing lightweight concrete roof tiles would result in an undesired increase in flowability and tendency for the extrudate to slump after shaping and that it would be impossible to compensate e.g. by reducing the amount of water in the mix without adversely affecting the cohesivity of the mix.

It is a further object of the present invention to provide a cement/lightweight aggregate/water mix which contains silica fume and which has advantageous properties for use in the roller and slipper method for the production of lightweight concrete roof tiles of good flexural strength.

The present invention is based upon the surprising discovery that a non-thixotropic silica fume can be incorporated into cement/lightweight aggregate/water mixes to provide such mixes having advantageous properties for use in the production of concrete roof tiles by the roller and slipper method and that very satisfactory lightweight concrete roof tiles of good flexural strength can thereby be produced.

According to one feature of the present invention, there is thus provided a method of producing concrete roof tiles in which a cement/aggregate/water mix is shaped by the roller and slipper method, the shaped extrudate thereby obtained is divided to form sections and the sections are cured, characterised in that the aggregate in the said mix comprises lightweight aggregate, the said mix additionally containing a non-thixotropic silica fume in a weight ratio of silica fume (calculated as dry weight) to cement within the range of from about 2:98 to about 25:75 and a dispersing agent for the said silica fume, the weight ratio of water: cementitious materials in the said mix being within the range of from about 0.45:1 to about 1:1 whereby the said mix is shaped, the extrudate divided and the sections cured to form lightweight concrete roof tiles.

According to a further feature of the present invention there is provided a lightweight concrete roof tile which has been produced by the roller and slipper method characterised in that the concrete contains a lightweight aggregate and has dispersed therein the reaction products of a non-thixotropic silica fume with lime; said tile having a density of from about 1.2 to about 1.6 $g/cm^3$ and said reaction products contributing to the flexural strength of the tile.

According to a still further feature of the present invention there is provided a cement/aggregate/water mix for use in the production of concrete roof tiles by the roller and slipper method, characterised in that the aggregate in the said mix comprises lightweight aggregate, the said mix additionally containing a non-thixotropic silica fume in a weight ratio of silica fume (calculated as dry weight) to cement within the range of from about 2:98 to about 25:75 and a dispersing agent for the said silica fume, the weight ratio of water: cementitious materials in the said mix being within the range of from about 0.45:1 to about 1:1 whereby the said mix is shapable by the roller and slipper method to provide an extrudate for division and curing to form lightweight concrete roof tiles.

Silica fumes are known materials which can be thixotropic or non-thixotropic according to the method used for their preparation. Thixotropic silica fumes in general comprise spherical silica particles fused together to form branched chains. When mixed with water the oxygen atoms of the silica particles enter into hydrogen bonding with the hydrogen atoms of the water molecules. In this way the water molecules become bound to the branched silica chains so that the mixture is highly viscous and thixotropic. An example of a thixotropic silica fume is the product "Cab-O-Sil" as referred to in US 3880664 (Schulze), this product being prepared by a vapour phase process involving the hydrolysis of silicon tetrachloride at about 1100°C. "Cab-0-Sil" is highly thixotropic with 10%, 22% and 33% by weight mixtures with water giving a gel, a sticky powder and a free-flowing powder respectively.

The expression 'non-thixotropic silica fume is used herein to define silica fumes which in the form of a 50% by weight mixture with water give a free flowing liquid slurry. In non-thixotropic silica fumes there is no significant degree of fusion of silica particles to form branched chains and when mixed with water such non-thixotropic silica fumes do not give rise to any significant amount of thixotropy in the mixture obtained. Thus, when incorporated into cement mixes for use in the production of concrete products, thixotropic silica fumes and non-thixotropic silica fumes perform very different functions.

One known method of producing non-thixotropic silica fumes is as a by-product in electric arc furnaces used for the production of silicon metal and ferrosilicon alloys. At the high temperatures reached in the formation of silicon metal and ferrosilicon alloys, silicon monoxide gas is formed by the reduction of quartz and is then re-oxidised to silica at the lower temperatures above the charge. The silica thereby obtained is condensed as fume and can be recovered by filtration. The non-thixotropic silica fume obtained consists of extremely fine, essentially spherical particles of amorphous silica, the mean average particle size typically being in the range of from about 0.05 to about 0.15 micrometer, e.g. about 0.1 micrometer, and the surface area typically being in the range of from about 15 to about 25 $m^2/g$, e.g. about 20 $m^2/g$. The exact chemical composition of the non-thixotropic silica fume can vary somewhat according to the precise method of production and for example three grades of non-thixotropic silica fume are available as ELKEM SILICA 100, ELKEM SILICA 90 and ELKEM SILICA 75 from Elkem Chemicals of Pittsburg, Pennsylvania, U.S.A. In general any of these grades of non-thixotropic silica fume, all of which have a high silica content within the range of from 85 to 98% by weight, is suitable for use in the present invention.

In order to prepare cement/lightweight concrete/water mixes according to the invention having advantageous properties for the purposes of producing concrete roof tiles by the roller and slipper method, it is desirable to incorporate the non-thixotropic silica fume into the mix in admixture with an effective amount of a dispersing agent therefor. Suitable dispersing agents include lignosulfonates, naphthalene sulfonate superplasticisers and melamine-formaldehyde superplasticisers, examples of such dispersing agents being CORMIX P1 lignosulfonate dispersing agent availabe from Cormix Limited, Warrington, Cheshire, England, CORMIX SP1 naphthalene sulfonate superplasticiser also available from Cormix Limited and MELMENT L10 melamine-formaldehyde superplasticiser available from Hoechst UK Limited of Hounslow, Middlesex, England. Where for example a lignosulfonate dispersing agent is used, the amount of dispersing agent is conveniently within the range of from about 2.0 to about 5.0% based upon the dry weight of the non-thixotropic silica fume. Where a superplasticiser is used, the amount calculated on a dry weight basis of naphthalene sulfonate or other superplasticiser is preferably in the range of from about 0.2 to about 5.0% based upon the weight of cementitious materials in the mix. The dispersing agent and the non-thixotropic silica fume are conveniently combined in the form of an aqueous slurry, for example containing the silica fume and water in a ratio of about 1:1 by weight. Silica fume/dispersing agent mixes are sometimes referred to as plasticised silica fumes and one such product suitable for use in the present invention is that available as EMSAC F110 from Elkem Chemicals.

The amount of non-thixotropic silica fume incorporated into the cement/lightweight aggregate/water mix should be effective to improve the flexural strength of the roof tiles obtained. It has been found that the use of weight ratios of non-thixotropic silica fume (calculated as dry weight) to cement of about 2:98 to about 25:27, more preferably about 6:94 to about 12:88 and still more preferably about 8.9 to about 12:88, provides a very substantial improvement in the flexural strength of the roof tiles obtained. Moreover, and very surprising having regard to the critical balance of properties required when extruding cement/lightweight aggregate/water mixes by the roller and slipper method it has been found possible to provide mixes containing such amounts of non-thixotropic silica fume which have advantageous properties for use in the roller and slipper method.

As stated above, available lightweight aggregates include naturally occurring materials such as pumice and scoria and materials produced by manufacturing processes such as sintered pulverised fuel ash and expanded materials such as expanded clay, shale, slate, vermiculite and perlite. In selecting the lightweight aggregate, it is important that the material concerned in combination with the other ingredients shall give a mix having the best possible properties for use in the roller and slipper method. It has been found that expanded clay aggregate is particularly suitable for this purpose. While the simple substitution of sand in a conventional cement/sand/water mix by an equal volume of expanded clay aggregate provides a mix with very poor rheological properties not at all suitable for extrusion to produce satisfactory roof tiles, it has surprisingly been found that the use of expanded clay as lightweight aggregate in mixes according to the invention which contain plasticised non-thixotropic silica fume provides mixes having very advantageous rheological properties. Using such mixes, it has been found possible by the method of the invention to produce well compacted tiles with a satisfactory smooth wear surface and with clearly defined interlocks, upstands, nibs and weatherchecks. Advantages which have been observed using expanded clay as lightweight aggregate in mixes according to the invention thus include the avoidance of any significant tendency for the extruded tiles to slump, for example upon cutting or when they are in the process of being transferred to a curing chamber; reduction of the common problem of abrasion of the slipper as a result of contact with the mix with consequent deterioration in the surface appearance of the tiles, the use of the mixes according to the invention having the beneficial effect of polishing the surface of the slipper thereby resulting in an improvement in the surface appearance of the tiles; and the possibility of extruding at lower pressures as a result of the advantageous rheological properties of the mixes according to the invention thereby reducing wear on the extruder.

The expanded clay which is preferably used in accordance with the invention is a sand-grade material, i.e. has a particle size of less than about 4.75 mm, and advantageously has a particle size distribution approximating to that of the sand used in conventional mixes for the production of concrete roof tiles by extrusion. Expanded clay aggregate meeting these requirements can be produced by an extrusion and chopping method. Fine sand-grade material having a particle size of less than about 3.35 mm is particularly preferred and one such material having a suitable particle size distribution is that available as RIDGELITE No. 3 FINE SAND from Lightweight Processing Co. of Glendale, California, U.S.A.

Other lightweight aggregate materials may be used instead of expanded clay, dependant however upon the availability of appropriate grades of such materials. One such material is expanded shale. Examples of other such materials are sintered pulverised fuel ash and pumice. Again sand-grades of these materials, having a particle size of less than about 4.75 mm and advantageously particle size distributions similar to that of the sand used in conventional mixes, are preferably used.

The ratio by weight of lightweight aggregate to cementitious materials (including the cement and the silica fume) is preferably in the range of about 1:1 to about 3:1, more preferably about 1.5:1 to about 2.5:1. In general, the lighter the aggregate the lower will be the weight ratio of aggreagate to cementitious materials. Where for example expanded clay is used as the lightweight aggregate, the weight ratio of expanded clay to cementitious materials is preferably about 2:1.

The cement used in the method according to the invention is conveniently ordinary Portland cement which is mixed with the lightweight aggregate, the non-thixotropic silica fume and dispersing agent therefor (preferably in the form of a plasticised non-thixotropic silica fume slurry) and water to form the mix. The amount of water requirded in order to obtain a mix of suitable consistency will in general be greater than that required for conventional mixes which contain sand as aggregate due to the porous character of most lightweight aggregates but need not be greatly increased. Thus the amount of water in the mix is preferably from about 12 to about 24% by weight, for example about 16 to about 19% by weight. The weight ratio of water:cementitious materials is in general in the range of from about 0.45:1 to about 1:1, preferably from about 0.6:1 to about 0.8:1. It will be appreciated that the amount of water as well as the amounts of non-thixotropic silica fume and dispersing agent therefor are selected to provide a mix having the desired consistency for use in the roller and slipper method, such mixes being non-pourable and having a low tendency to slump after shaping. The mixes for use in the method according to the present invention should thus be formulated to give a diameter measurement of not more than about 10.5 cms when evaluated by the consistency test in accordance with BS 4551 as hereinbefore described and should have good cohesivity whereby when subjected to the said consistency test, no cracks visible to the naked eye are apparent in the shaped material.

Pigments may be incorporated in the mix in order to provide roof tiles of the desired colour. The mix is extruded, cut and cured in accordance with the well-known roller and slipper method, curing conveniently being carried out at temperatures of from 35°C to 65°C, preferably about 50°C, for at least 8 hours, preferably from 12 to 24 hours, under conditions of high humidity. Whilst it is not desired to be restricted by any theoretical explanation for the working of the invention, it is believed that during curing an additional chemical reaction takes place between the silica fume and lime released as a result of the hydration of the cement and that the calcium silicate hydrates thereby formed contribute to the strength of the roof tiles produced.

It has been possible using a method according to the invention to produce concrete roof tiles having densities of from about 1.2 to about 1.6 g/cm$^3$, for example about 1.3 to about 1.5 g/cm$^3$, and having a weight per tile down to about 55% of the weight of conventional concrete roof tiles but with comparable flexural strength. Because of the improvement in flexural strength resulting from the presence of the reaction products of plasticised non-thixotropic silica fume and lime, the desired flexural strength is obtained with reduced thicknesses as compared with the usual thickness for conventional roof tiles and the reduction in thickness as well as the lightweight aggregate contribute to the overall up to 45% reduction in the weight of the tile. The tiles in accordance with the present invention preferably have a minimum thickness (excluding interlocks which are generally thinner than the main body of the tile) of from about 9 to about 12 mm, particularly about 10 to about 11 mm. The flexural strength (i.e. average breaking load) of the tiles according to the invention when measured in Newtons (N) in accordance with British Standard No. 473550 is preferably as follows:

    a) flat interlocking (i.e. single lap) tiles, not less than about 3.2 times and more preferably not less than about 4.0 times the effective width of the tiles in millimetres,

    b) for convoluted interlocking (i.e. single lap) tiles not less than about 3.2 times and more preferably not less than about 5.0 times the effective width of the tiles in millimetres,

    c) for plane tiles at least about 490 N and more preferably at least about 600 N and

    d) for double lap tiles, not less than about 2.1 times the effective width of the tiles.

Thus, for example, with interlocking (i.e. single lap) tiles having the usual dimensions for the United States of America of about 422 mm length×333 mm width×11.5 to 12.5 mm thickness, the flexural strength for flat tiles is advantageously at least about 1200 N and for convoluted tiles at least about 1600 N.

The following examples illustrate the invention:

Example 1

909 kg of moist RIDGELITE No 3 FINE SAND (water content of about 18% by weight), 335 kg of Portland cement, 82.7 kg of EMSAC F110 and 13 kg of a synthetic red oxide pigment were mixed in a rotary pan mixer with sufficient water to provide an extrudable mix containing about 18% by weight of water. The mix was used to extrude concrete roof tiles on metal pallets by the well-known roller and slipper method, the settings on the extruder (i.e. the box) being adjusted to provide a tile thickness of about 10.5 mm. On extrusion, it was found that good quality convoluted interlocking tiles were formed with a satisfactorily smooth surface, well formed and defined interlocks and well filled and formed nibs and weatherchecks on the bottom surface of the tiles. Approximately 420 tiles of dimensions 422 mm×333 mm×about 10.5 mm were made from this mix. These tiles were transported to curing cabinets where they were cured at 50°C and 95—100% Relative Humidity for a period of 10 hours. After curing, the tiles were removed from the metal pallets and allowed to stand in stacks in the open for a period of 7 days. Sample tiles were then selected at random, weighed and tested for flexural strength by the method specified in British Standard No. 473550.

    Average weight per tile—2.72 kg
    Average flexural strength—2070 N

Example 2 (for comparison)

1227 kg of damp silica sand (water content of about 3% by weight), 373 kg Portland cement and 13 kg of a synthetic red oxide pigment were mixed in a rotary pan mixer with sufficient water to provide an extrudable mix containing about 9% by weight water. The mix was used to extrude concrete roof tiles on metal pallets as in Example 1, the settings on the extruder (i.e. the box) being adjusted to provide a tile thickness of about 12 mm. On extrusion, it was found that good quality convoluted interlocking tiles were made, with a satisfactorily smooth surface, well formed and defined interlocks and well filed nibs and weatherchecks on the bottom surface of the tiles. Approximately 360 tiles, of dimensions 422 mm×333 mm×about 12 mm and of the same convoluted shape as the tiles in Example 1, were made from this mix. These tiles were transported to curing cabinets where they were cured at 50°C and 95—100% Relative Humidity for a period of 10 hours. After curing, the tiles were removed from the metal pallets and allowed to stand in stacks in the open for a period of 7 days. Sample tiles were then selected at random, weighed and tested for flexural strength by the method specified in British Standard No. 473550. The results obtained were as follows:-

    Average weight per tile—4.60 kg
    Average flexural strength—2100 N

Example 3 (for comparison)

909 kg of moist RIDGELITE No. 3 FINE SAND (water content of about 18% by weight), 373 kg of Portland cement and 13 kg of a synthetic red oxide pigment were mixed in a rotary pan mixer with sufficient water to provide an extrudable mix containing about 18% by weight of water. The mixe was used to extrude concrete roof tiles on metal pallets as in Example 1, the settings on the extruder (i.e. the box) being adjusted to provide a tile thickness of about 10.5 mm. On extrusion it was found that the tiles could not be satisfactorily formed and that they exhibited a rough and 'open" surface texture, highly feathered and broken interlocks and incomplete filling of the nib and weathercheck sections on the bottom surface of the tiles. Attempts to repeat the above but using different levels of water addition were unsuccessful and no tiles were of sufficiently satisfactory quality for strength tests to be carried out.

A comparison of Example 1 in accordance with the present invention and Example 2 in accordance with conventional practice shows that it is possible by means of the present invention to produce concrete roof tiles which have substantially the same flexural strength as those produced by a conventional method but which have a reduced thickness and weight which is only about 60% of that of tiles produced by the conventional method.

A comparison of Example 1 in accordance with the present invention and Example 3 in which the same lightweight aggregate is used but without the presence of non-thixotropic silica fume shows the advantage which is provided by the use of a cementitious mixture containing non-thixotropic silica fume and cement in a weight ratio of about 1:9 as compared with the use of cement alone as the cementitious material.

Example 4

636 kg of moist Baypor sand (an expanded shale having a water content of about 11% by weight available from Port Costa Materials Inc of Port Costa, California, USA), 273 kg of Portland cement, 67 kg of EMSAC F110 and 10 kg of a synthetic red oxide pigment were mixed in a rotary pan mixer with sufficient water to provide an extrudable mix containing about 15% by weight of water. The mix was used to extrude concrete roof tiles on metal pallets by the well-known roller and slipper method, the settings on the extruder (i.e. the box) being adjusted to provide a tile thickness of about 10.5 mm. On extrusion it was found that good quality convoluted interlocking tiles were formed with a satisfactory smooth surface, well formed and defined interlocks and well filled and formed nibs and weatherchecks on the bottom surface of the tiles. Approximately 285 tiles of dimensions 422 mm×333 mm×about 11 mm were made from this mix. These tiles were transported to curing cabinets where they were cured at 50°C and 95—100% Relative Humidity for a period of 12 hours. After curing, the tiles were removed from the metal pallets and allowed to stand in stacks in the open for a period of 7 days. Sample tiles were then selected at random, weighted and tested for flexural strength by the method specified in British Standard No. 473550.

Average weight per tile—3.44 kg
Average flexural strength—2192 N

Example 5

510 kg of moist Baypor sand (having a water content of about 7% by weight), 227 kg of Portland cement, 25 kg of Correcem (a dry non-thixotropic silica fume available from Scancem, Slemmestad, Norway incorporating a naphthalene sulphonate superplasticizer) and 10 kg of a synthetic red oxide pigment were mixed in a rotary pan mixer with sufficient water to provide an extrudable mix containing about 16% by weight of water. The mix was used to extrude concrete roof tiles on to metal pallets by the roller and slipper method, the settings on the extruder (i.e. the box) being adjusted to provide a tile thickness of around 11.0 mm. On extrusion it was found that good quality convoluted interlocking tiles were formed with a satisfactory smooth surface, well formed and defined interlocks and well filled and formed ribs and weatherchecks on the bottom surface of the tiles. Approximately 250 tiles of dimensions 422 mm×333 mm×about 11 mm were made from the mix. These tiles were transported to curing cabinets where they were cured at 44°C and 95—100% Relative Humidity for a period of 8 hours. After curing, the tiles were removed from the metal pallets and allowed to stand in stacks in the open for a period of 7 days. Sample tiles were then selected at random, weighed and tested for flexural strength by the method specified in British Standard No. 473,550.

Average weight per tile—3.08 kg
Average flexural strength—1630 N

Example 6

360 kg of moist Lytag fine grade aggregate (a sintered pulverized fuel ash having a water content of about 5% by weight, available from Pozzolanic-Lytag Limited of Hemel Hempstead, Hertfordshire, England), 172 kg of Portland cement, 35 kg of EMSAC F110 and 10 kg of a synthetic red oxide pigment were mixed in a rotary pan mixer with sufficient water to provide an extrudable mix containing about 14% by weight of water. The mix was used to extrude concrete roof tiles on to metal pallets by the roller and slipper method, the settings on the extruder (i.e. the box) being adjusted to provide a tile thickness of about 11 mm. On extrusion it was found that good quality convoluted interlocking tiles were formed with a satisfactory smooth surface, well formed and defined interlocks and well filled and formed ribs and weatherchecks on the bottom surface of the tiles. Approximately 260 tiles of dimensions 380 mm×230 mm×about 11 mm were made from the mix. The tiles were transported to curing cabinets where they were cured at 42°C and 95—100% Relative Humidity for a period of 15 hours. After curing, the tiles were removed from the metal pallets and allowed to stand in stacks in the open for a period of 7 days. Sample tiles were then selected at random, weighed and tested for flexural strength by the method specified in British Standard No. 473,550.

Average weight per tile—2.24 kg
Average flexural strength—1248 N

**Claims**

1. A method of producing concrete roof tiles in which a cement/aggregate/water mix is shaped by the roller and slipper method, the shaped extrudate thereby obtained is divided to form sections and the sections are cured, characterised in that the aggregate in the said mix comprises lightweight aggregate, the said mix additionally containing a non-thixotropic silica fume in a weight ratio of silica fume (calculated as dry weight) to cement within the range of from about 2:98 to about 25:75 and a dispersing agent fmchthe said silica fume, the weight ratio of water:cementitious materials in the said mix being within the range of from about 0.45:1 to about 1:1, whereby the said mix is shaped, the extrudate divided and the sections cured to form lightweight concrete roof tiles.

2. A method according to claim 1 wherein the non-thixotropic silica fume is a by-product of an electric arc furnace process for the production of silicon metal and ferrosilicon alloys.

3. A method according to claim 1 or claim 2 wherein the non-thixotropic silica fume has a mean average particle size in the range of from about 0.05 to about 0.15 micrometer and a surface area in the range of from about 15 to about 25 m²/g.

4. A method according to any of the preceding claims wherein the lightweight aggregate comprises a sand-grade expanded clay or sand-grade expanded shale having a particle size of less than about 4.75 mm.

5. A method according to claim 4 wherein the particle size is less than about 3.35 mm.

6. A method according to any of the preceding claims wherein the weight ratio of non-thixotropic silica fume (calculated as dry weight) to cement is from about 8:92 to about 12:88.

7. A method according to any of the preceding claims wherein the weight ratio of water: cementitious materials in said mix is in the range of from about 0.6:1 to about 0.8:1.

8. A method according to any of the preceding claims wherein the dispersing agent is a lignosulfonate dispersing agent.

9. A method according to claim 8 wherein the mix contains an amount of the lignosulfonate dispersing agent within the range of from about 2.0 to about 5.0% based upon the dry weight of the silica fume.

10. A method according to any of claims 1 to 7 wherein the dispersing agent is a naphthalene sulfonate superplasticiser.

11. A method according to claim 10 wherein the mix contains the naphthalene sulfonate superplasticiser in an amount calculated on a dry weight basis of from about 0.2 to about 5.0% based upon the weight of cementitious materials in the mix.

12. A method according to claim 11 wherein said amount of naphthalene sulfonate superplasticiser is from 0.75 to 3.0%.

13. A lightweight concrete roof tile which has been produced by the roller and slipper method characterised in that the concrete contains a lightweight aggregate and has dispersed therein the reaction products of a non-thixotropic silica fume with lime; said tile having a density of from about 1.2 to about 1.6 g/cm³ and said reaction products contributing to the flexural stength of the tile.

14. A lightweight concrete roof tile when produced by a method as claimed in any of claims 1 to 12.

15. A roof tile according to either of claims 13 and 14 having a density of from about 1.3 to about 1.5 g/cm³.

16. A cement/aggregate/water mix for use in the production of concrete roof tiles by the roller and slipper method, characterised in that the aggregate in the said mix comprises lightweight aggregate, the said mix additionally containing a non-thixotropic silica fume in a weight ratio of non-thixotropic silica fume (calculated as dry weight) to cement within the range of from about 2:98 to about 25:75 and a dispersing agent for the said silica fume, the weight ratio of water:cementitious materials in the said mix being within the range of from about 0.45:1 to about 1:1 whereby the said mix is shapable a by the roller and slipper method to provide an extrudate for division and curing to form lightweight concrete roof tiles.

**Patentansprüche**

1. Verfahren zur Herstellung von Betondachziegeln, bei dem ein Zement-Zuschlagsstoff-/Wasser-Gemisch mittels eines Walz-und Gleitverfahrens geformt wird, das so erhaltene geformte Extrudat zur Ausbildung von Abschnitten geteilt wird und die Abschnitte gehärtet werden, dadurch gekennzeichnet, daß der Zuschlagsstoff in dem Gemisch einen Leichtgewichtszuschlagsstoff aufweist, das Gemisch zusätzlich einen nichtthixotropen Silikastaub in einem Gewichtsverhältnis des Silikastaubs (als Trockengewicht berechnet) zu Zement innerhalb eine Bereiches von etwa 2:98 bis etwa 25:75 und ein Dispersionsmittel für den Silikastaub enthält, wobei das Gewichtsverhältnis von Wasser zu Zementmaterialien in dem Gemisch innerhalb des Bereichs von etwa 0,45:1 bis etwa 1:1 beträgt, wobei die Mischung geformt wird, das Extrudat unterteilt wird und die Abschnitte gehärtet werden, um Leichtbetondachziegel zu bilden.

2. Verfahren nach Anspruch 1, dadurch gekennzeichnet, daß der nichtthixotrope Silikastaub ein Nebenprodukt eines Lichtbogenofenprozesses zur Herstellung von Siliziummetall und Eisensiliziumlegierungen ist.

3. Verfahren nach Anspruch 1 oder 2, dadurch gekennzeichnet, daß der nichtthixotrope Silikastaub eine mittlere Partikelgröße im Bereich von etwa 0,05 bis etwa 0,15 µm und einen Oberflächenbereich im Bereich von etwa 15 bis 25 m²/g aufweist.

4. Verfahren nach einem der vorstehenden Ansprüche, dadurch gekennzeichnet, daß der Leichtgewichtszuschlagsstoff einen sandklassierten erweiterten Ton oder sandklassierten erweiterten Schiefer mit einer Partikelgröße von weniger als etwa 4,75 mm aufweist.

5. Verfahren nach Anspruch 4, dadurch gekennzeichnet, daß die Partikelgröße kleiner als etwa 3,35 mm ist.

6. Verfahren nach einem der vorstehenden Ansprüche, dadurch gekennzeichnet, daß das Gewichtsverhältnis von nichtthixotropem Silikastaub (als Trockengewicht berechnet) zu Zement von etwa 8:92 bis etwa 12:88 beträgt.

7. Verfahren nach einem der vorstehenden Ansprüche, dadurch gekennzeichnet, daß das Gewichtsverhältnis von Wasser zu Zementmaterialien in der Mischung im Bereich von etwa 0,6:1 bis etwa 0,8:1 beträgt.

8. Verfahren nach einem der vorstehenden Ansprüche, dadurch gekennzeichnet, daß das Dispersionsmittel ein Lignosulfonat-Dispersionsmittel ist.

9. Verfahren nach Anspruch 8, dadurch gekennzeichnnet, daß die Mischung einen Anteil von Lignosulfonat-Dispersionsmittel innerhalb des Bereiches von etwa 2,0 bis etwa 5,0% bezüglich des Trockengewichts des Silikastaubes enthält.

10. Verfahren nach einem der Ansprüche 1 bis 7, dadurch gekennzeichnet, daß das Dispersionsmittel ein Naphthalensulfonat-Superweichmacher ist.

11. Verfahren nach Anspruch 10, dadurch gekennzeichnet, daß die Mischung Naphthalensulfonat-Superweichmacher in einem Anteil, berechnet aufgrund des Trockengewichtes, von etwa 0,2 bis etwa 5,0 % bezüglich des Gewichtes der Zementmaterialien in der Mischung enthält.

12. Verfahren nach Anspruch 11, dadurch gekennzeichnet, daß der Anteil des Naphthalensulfonat-Superweichmachers 0,75 bis 3% beträgt.

13. Leichtbetondachziegel, der durch das Walz- und Gleitverfahren hergestellt wurde, dadurch gekennzeichnet, daß der Beton einen Leichtgewichtszuschlagstoff enthält und in dem die Reaktionsprodukte eines nichtthixotropen Silikastaubes mit Kalk verteilt enthält, wobei der Ziegel eine Dichte von etwa 1,2 bis etwa 1,6 g/cm$^3$ aufweist und die Reaktionsprodukte zur Biegefestigkeit des Ziegels beitragen.

14. Leichtbetondachziegel, hergestellt nach einem in den Ansprüchen 1 bis 12 beanspruchten Verfahren.

15. Dachziegel nach einem der Ansprüche 13 und 14 mit einer Dichte von etwa 1,3 etwa 1,5 g/cm$^3$.

16. Zement-/Zuschlagsstoff-/Wasser-Mischung zum Gebrauch für die Herstellung von Betondachziegeln mittels des Walz- und Gleitverfahrens, dadurch gekennzeichnet, daß der Zuschlagsstoff in der Mischung einen Leichtgewichts-Zuschlagsstoff aufweist, daß die Mischung zusätzlich einen nichtthixotropen Silikastaub in einem Gewichtsverhältnis von nichtthixtropem Silikastaub (berechnet als Trockengewicht) zu Zement innerhalb des Bereiches von etwa 2:98 bis etwa 25:75 und ein dispersionsmittel für den Silikastaub enthält, wobei das Gewichtsverhältnis von Wasser zu Zementmaterialien in der Mischung innerhalb des Bereiches von etwa 0,45:1 bis etwa 1:1 liegt, wobei diese Mischung durch das Walz- und Gleitverfahren formbar ist, um ein Extrudat zur Aufteilung und zum Aushärten zu bilden und Leichtbetondachziegel zu erzeugen.

## Revendications

1. Procédé de fabrication de tuiles de béton, dans lequel un mélange de ciment, d'un agrégat et d'eau est mis en forme par le procédé du rouleau et du patin, le produit moulé par extrusion ainsi obtenu étant divisé pour former des tronçons et les tronçons étant durcis, caractérisé en ce que l'agrégat dans le mélange est un agrégat de faible poids, le mélange contentant au surplus de la silice pyrogénée non thixotropique dans un rapport pondéral de silice pyrogénée (calculé en poids sec) au ciment, de l'ordre d'environ 2:98 à environ 25:75, et un agent de dispersion pour la silice pyrogénée, le rapport pondéral de l'eau aux matières cimentaires du mélange étant de l'ordre d'environ 0,45:1 à environ 1:1, le mélange étant mis en forme, le produit mis en forme étant divisée et les tronçons étant durcis pour former des tuiles de béton de faible poids.

2. Procédé suivant la revendication 1, dans lequel la silice pyrogénée non thixotropique est un sous-produit d'un procédé au four à arc électrique pour la production de silicium métallique et d'alliages de ferrosilicium.

3. Procédé suivant la revendication 1 ou 2, dans lequel la silice pyrogénée non thixotropique a des dimensions moyennes de particules de l'ordre d'environ 0,05 à environ 0,15 micromètres et une aire superficielle de l'ordre d'environ 15 à environ 25 m$^2$/g.

4. Procédé suivant l'une quelconque des revendications précédentes, dans lequel l'agrégat de poids léger est une argile cellulaire du calibre des grains de sable, ou un schiste cellulaire du calibre des grains de sable, ayant une dimension des particules inférieure à environ 4,75 mm.

5. Procédé suivant la revendication 4, dans lequel la dimension des particules est inférieure à environ 3,35 mm.

6. Procédé suivant l'une quelconque des revendications précédentes, dans lequel le rapport pondéral de la silice pyrogénée non thixotropique (calculé en poids sec) au ciment est d'environ 8:92 à environ 12:88.

7. Procédé suivant l'une quelconque des revendications précédentes, dans lequel le rapport pondéral de l'eau aux matières cimentaires du mélange est de l'ordre de 0,6:1 à environ 0,8:1.

8. Procédé suivant l'une quelconque des revendictions précédentes, dans lequel l'agent de dispersion est un agent de dispersion du type lignosulfonate.

9. Procédé suivant la revendication 8, dans lequel le mélange contient une quantité d'agent de dispersion du type lignosulfonate de l'ordre d'environ 2,0 à environ 5,0%, basée sur le poids sec de la silice pyrogénée.

10. Procédé suivant l'une quelconque des revendications 1 à 7, dans lequel l'agent de dispersion est un superplastifiant du type naphtalène sulfonate.

11. Procédé suivant la revendication 10, dans lequel le mélange contient le superplastifiant du type naphtalène sulfonate en une quantité calculée sur la base du poids sec, d'environ 0,2 à environ 5,0%, basée sur le poids des matières cimentaires du mélange.

12. Procédé suivant la revendication 11, dans lequel la quantité de superplastifiant du type naphtalène sulfonate est de 0,75 à 3,0%.

13. Tuile de béton de poids léger, produite par le procédé du rouleau et du patin et caractérisée en ce que le béton contient un agrégat de poids léger, et en ce que sont dispersés en lui les produits de réaction de silice pyrogénée non thixotropique avec de la chaux, la tuile ayant une densité d'environ 1,6 g/cm$^3$ et les produits de réaction contribuant à la résistance de la tuile à la flexion.

14. Tuile de béton de faible poids lorsque'elle est produite par un procédé tel que revendiqué dans l'une quelconque des revendications 1 à 12.

15. Tuile de béton suivant l'une quelconque des revendications 13 et 14, ayant une densité d'environ 1,3 à environ 1,5 g/cm³.

16. Mélange de ciment, d'un agrégat et d'eau à utiliser dans la production de tuiles de béton par le procédé du rouleau et du patin, caractérisée en ce qu l'agrégat du mélange est un agrégat de faible poids, le mélange contentant au surplus de la silice pyrogénée non thixotropique dans un rapport pondéral de silice pyrogénée non thixotropique (calculé en poids sec) au ciment, de l'ordre d'environ 2:98 à environ 25:75 et une agent de dispersion pour la silice pyrogénée, le rapport pondéral de l'eau aux matières cimentaires dans le mélange étant de l'ordre d'environ 0,45:1 à environ 1:1, le mélange étant susceptible d'être mis en forme par le procédé du rouleau et du patin pour donner un produit extrudé pour ètre divisé et durci pour former des tuiles de béton de poids léger.